# EUROPEAN PATENT SPECIFICATION

(11) **EP 1 347 444 B1**
(45) Date of publication and mention of the grant of the patent: **15.10.2008**
(21) Application number: 02258495.7
(22) Date of filing: 10.12.2002
(51) Int. Cl.: G11B 7/0045, G11B 7/125

(54) **Method and apparatus for recording data on optical recording medium**
Verfahren und Vorrichtung zur Aufzeichnung von Daten auf einem optischen Aufzeichnungsmedium
Procédé et appareil d'enregistrement de données sur un support d'enregistrement optique

(30) Priority: 18.03.2002 KR 2002014461
(43) Date of publication of application: 24.09.2003
(73) Proprietor: SAMSUNG ELECTRONICS CO., LTD., Suwon-City, Kyungki-do (KR)
(72) Inventor: Seo, Jin-gyo, Suwon-si, Gyeonggi-do (KR); Go, Sung-ro, Taean-eup, Hwaseong-gun, Gyeonggi-do (KR)
(74) Representative: Brandon, Paul Laurence

(56) References cited:
- EP-A- 1 339 048
- EP-A2- 1 058 240
- WO-A2-01/06500
- JP-A- 2000 149 302
- US-A1- 2001 007 548

## Description

Recording data on an optical disc means to form marks and spaces on a spatial track formed on the optical disc. A mark is formed as a pit in a read-only disc such as a Compact Disc-Read Only Memory (CD-ROM) and a Digital Versatile Disc-Read Only Memory (DVD-ROM). In a recordable disc such as a CD-R/RW and a DVD-R/RW/RAM, a mark is formed by radiating a laser signal on a phase-change recording film, which changes into a crystal phase or an amorphous phase according to the temperature level, or a recording film coated with an organic pigment whose light transmissivity changes according to the temperature level.

In terms of signal detection, methods for recording data on an optical disc can be divided into a mark edge recording method an a mark position recording method. According to the mark position recording method, the polarity of a detected radio frequency (RF) signal changes into an opposite polarity at a location at which a mark is recorded. According to the mark edge recording method, the polarity of a detected RF signal changes into an opposite polarity at both edges of a mark. Therefore, recording the edges of a mark is an important factor in improving the quality of a reproducing signal.

However, in a disc coated with a phase-changing film, it is shown that the shape of a trailing edge of a mark that is recorded according to a conventional recording method varies with the length of the mark or an interval between marks, i.e., a space there between. That is, when the trailing edge of a mark is formed greater than the leading edge of the mark, the recording and reproducing characteristics degrade. When a recording mark is relatively long, the characteristics degrade more due also to thermal accumulation. This phenomenon is referred to as a tear drop and influences very much the jitter characteristic of a recording signal.

In the meantime, recording data on an optical disc is influenced by the recording speed. Nowadays, CD-Rs supporting 24× speed have appeared on the market, and DVDs supporting 4× speed are expected soon.

An increase of the recording speed means that the time taken to form marks having the same length is shortened inversely proportional to the recording speed. Accordingly, a high-power laser diode or an improved recording pulse is required.

Recording data on an optical disc is also influenced by a high recording density. Researches on this topic has led to 4.7 Gbyte HD-DVD (in case of a single layer and single surface), and 23 Gbyte HD-DVD (in case of a single layer and single surface) and 50 Gbyte HD-DVD have also been investigated. An increase of a recording density means that a track pitch is narrowed or a minimum mark length is shortened. As a result, cross erase occurs or interference between marks increases. Consequently, a more elaborate recording control is desired.

WO 01/06500 discloses methods and devices for writing an optical record carrier, in which a mark representing recorded data is written in a phase-change layer of a record carrier by a sequence of radiation pulses. A rear heating pulse (24) is introduced after a last write pulse (23, 26) and a front heating pulse (25) is introduced before the first write pulse (22,26). The power level (13) of the front heating pulse and the power level (15) of the rear heating pulse may be dependent on the length of the mark to be recorded and on properties of the record carrier.

JP 2000 149302 discloses the laser driver of an optical pickup that generates a prescribed laser driving signal based on a recording signal at the time of a record mode and generates a prescribed laser driving signal at the time of a reproduction mode to supply them to a high frequency superposing circuit.

US 2001/0007548 discloses an information recording/reproducing apparatus that includes a detector circuit for detecting a state of reflection light from the recording medium, a control circuit for calculating a radiation power used for writing the information in the recording medium, in accordance with the reflection light state, a pulse generator circuit for generating record pulse information in accordance with the radiation power, and an optical driver circuit for converting the record pulse information into optical information in accordance with the radiation power and driving the optical head to record the light information into the recording medium.

EP 1 058 240 discloses a method of generating write pulse control signals adaptive to various optical recording media, and a recording apparatus adopting the method.

It is an aim of preferred embodiments of the present invention to provide a method and apparatus for recording data using a recording waveform which is adequate for high speed and high density discs and which can suppress distortion of a recording mark so as to improve jitter characteristics.

According to the present invention, there is provided a method of forming a mark and a space by radiating a laser signal corresponding to a recording pulse having a peak level and a bias level, onto an optical recording medium, the method comprising forming the mark and space using the recording pulse comprising a fine adjustment pulse with an amplitude less than the peak level and superimposed on the peak level; wherein the number of pulses constituting the fine adjustment pulse is equal to or less than "n" when the length of an interval in which the peak level or bias level is applied is nT, wherein "n" is an integer greater than or equal to 1 and nT is the period of the peak level and the bias level; **characterised in that** the fine adjustment pulse is superimposed on the peak level except in an overdrive interval or first pulse interval of the recording pulse.

Preferably, the waveform, amplitude, and/or period of the fine adjustment pulse are determined according to the optical recording medium.

Preferably, the fine adjustment pulse is superimposed on the bias level.

Preferably, the reference level is one among the peak level and the bias level.

Preferably, the waveform of the fine adjustment pulse is led by one among a positive pulse and a negative pulse.

According to the present invention in a second aspect, there is provided an optical recording apparatus for forming a mark and a space by radiating a laser signal corresponding to a recording pulse having a peak level and a bias level onto an optical recording medium, the optical recording apparatus comprising: a recording pulse generator which generates the recording pulse by superimposing a fine adjustment pulse with an amplitude less than the peak level on the peak level and the bias level, and a laser diode for generating the laser signal according to the recording pulse generated by the recording pulse generator; wherein the number of pulses constituting the fine adjustment pulse is equal to or less than "n" when the length of an interval in which the peak level or bias level is applied is nT, wherein "n" is an integer greater than or equal to 1 and nT the period of the peak level and the bias level; characterised in that the laser diode generates a fine adjustment pulse configured to be superimposed on the peak level and the bias level except in an overdrive interval (Tod, Tod 1, Tod 2) or first pulse interval of the recording pulse.

The present invention will become more apparent by describing in detail preferred embodiments thereof, by way of example only, with reference to the attached drawings in which:
Figure 1 is a diagram showing recording pulses according to conventional recording methods;
Figure 2 is a detailed diagram of recording pulses used to record data on a Digital Versatile Disc-Random Access Memory (DVD-RAM);
Figure 3 is a diagram illustrating the relationship between a domain formed on a disc and a recording pulse;
Figure 4 is a diagram showing examples of recording pulses generated by a method of generating a recording waveform according to an embodiment of the present invention;
Figure 5 is a diagram showing examples of waveforms of fine adjustment pulses according to the present invention;
Figure 6 is a diagram showing the relationships between a fine adjustment pulse and a reference level according to the present invention;
Figure 7 is a flowchart of a recording method according to an embodiment of the present invention; and
Figure 8 is a block diagram of a recording apparatus according to an embodiment of the present invention.

Hereinafter, the structure and operation of the present invention will be described in detail with reference to the attached drawings.

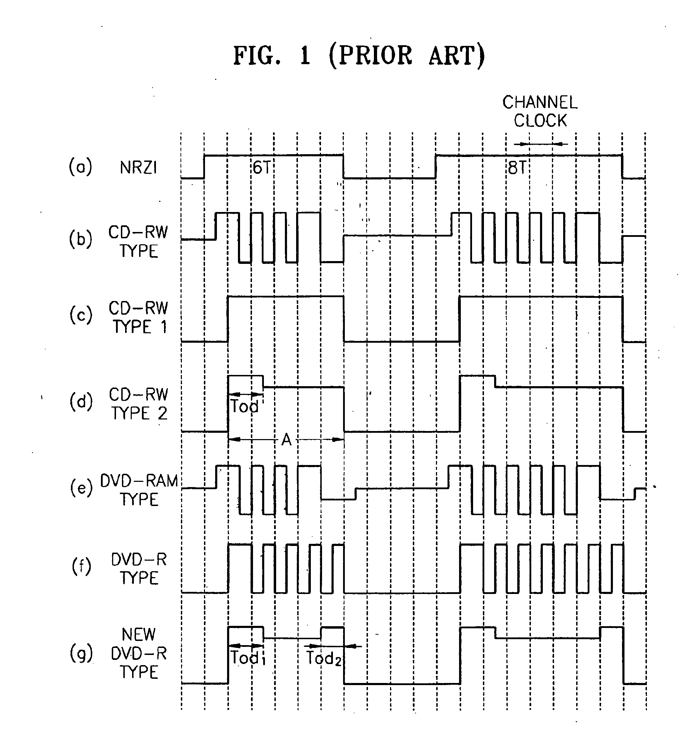

Figure 1 is a diagram showing recording pulses according to conventional recording methods. Figure 1 shows various recording pulses (b) through (g) used to record 6T and 8T Non Return to Zero Inverted (NRZI) data (a). The recording pulse (b) is for a CD-RW type (phase-change disc). The recording pulses (c) and (d) are for CD-RW types 1 and 2 (organic pigment discs), respectively. The recording pulse (e) is for a DVD-RAM type. The recording pulse (f) is for a DVD-R type. The recording pulse (g) is for a new DVD-R type. Here, T indicates the period of a reference clock.

As is seen from the waveform (d) shown in Figure 1, the CD-RW type 2 has an overdrive interval (Toverdrive: Tod) as compared to the CD-RW type 1. The Tod changes a little above or below 1.5T and has a level changing about 20% above or below a peak level. As is seen from the waveform (g) shown in Figure 1, the new DVD-R type has two overdrive intervals Tod₁ and Tod₂.

According to a mark edge recording method, a high level of NRZI data is recorded as a mark and a low level thereof is formed as a space. In order to form a domain (which is a concept corresponding to a mark and is an area in which a crystal phase is formed on a phase-change disc) on a phase-change optical disc, a multi-pulse, as shown in the interval A of the waveform (e) shown in Figure 1, is used. Here, the power level of the multi-pulse is adjusted to one of four levels, i.e., Ppeak, Pb1, Pb2, and Pb3.

The multi-pulse is used for a phase-change optical disc in order to prevent a domain from being distorted in the radial or tangential direction of the disc due to thermal accumulation.

In order to form a domain in an organic pigment optical disc, a single pulse, as shown in the interval A of the waveform (d) shown in Figure 1, is used. The power level of the single pulse is adjusted to one of three levels, i.e., Powerdrive, Ppeak, and Pbias.

However, as the time taken to form a recording mark is shortened with an increase of the recording speed, a single pulse may be used for a phase-change optical disc like for an organic pigment optical disc.

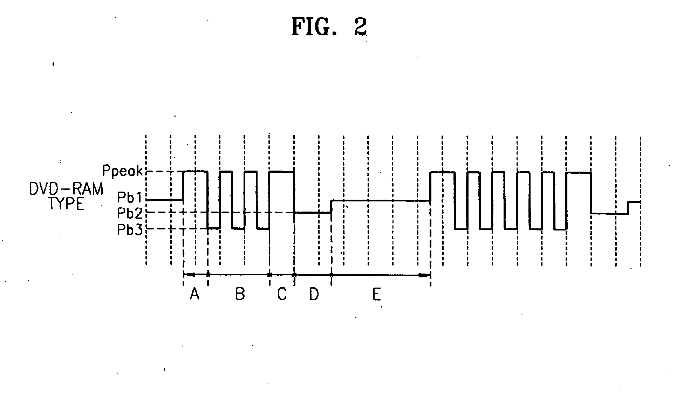

Figure 2 is a detailed diagram of recording pulses used to record data on a DVD-RAM. According to the 2.6 Gbyte DVD-RAM standard, a recording pulse for forming a mark is composed of a first pulse, a multi-pulse chain, a last pulse, and a cooling pulse. According to the length of a recording mark, the number of pulses in the multi-pulse chain changes while the first and last pulses are maintained. The power level of a recording pulse changes among four levels, i.e., a peak (Ppeak), a power of bias1 or erase (Pb1), a power of bias2 or cooling (Pb2), and a power of bias3 or bottom (Pb3).

The first pulse corresponding to the interval A shown in Figure 2 is provided to form a leading edge of a recording mark. The first pulse has the Ppeak level. The Ppeak level corresponds to the power of a laser signal for forming a proper temperature to convert the phase-change recording film to a liquid phase. The interval in which the first pulse is applied is denoted by Ttop.

The multi-pulse chain corresponding to the interval B shown in Figure 2 is inserted between the first pulse and the last pulse. The multi-pulse chain is provided to reduce non-uniformity caused by thermal accumulation in the mark and is composed of a plurality of pulses. The number of pulses varies with the length of the mark. The multi-pulse chain has the Ppeak level and the Pb3 level (or the bottom level). The Pb3 level corresponds to the power of a laser signal for forming a proper temperature to convert the phase-change recording film to a crystal phase and is similar to a reproducing power level of a usual laser signal or lower.

The last pulse corresponding to the interval C shown in Figure 2 is provided to form a trailing edge of the recording mark. Like the first pulse, the last pulse has the Ppeak level.

The cooling pulse corresponding to the interval D shown in Figure 2 follows the last pulse and is provided to prevent the recording mark from becoming too long. The cooling pulse has the Pb2 level (or the cooling level). The Pb2 level is set between the Pb1 level and the Pb3 level.

An erase pulse corresponding to the interval E shown in Figure 2 is provided to form a space. The erase pulse has the Pb1 level. The Pb1 level corresponds to the power of a laser signal for forming a proper temperature to convert the phase-change recording film to an amorphous state.

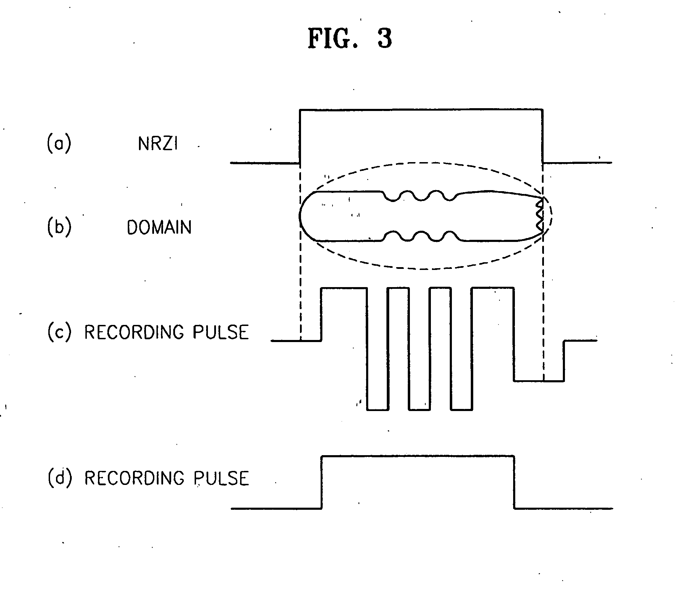

Figure 3 is a diagram illustrating the relationship between a domain formed on a disc and a recording pulse. Figure 3(a) shows an NRZI signal, Figure 3(b) shows the shape of a domain formed on a disc, and Figures 3(c) and 3(d) show recording pulses.

Digital information is recorded on a phase-change optical disc according to a crystal/amorphous phase of a recording film. A laser diode is used to apply heat. A recording film is converted to an amorphous phase (or an erase phase) at about 300°C and to a liquid phase at about 600°C.

Usually, when the temperature of a recording film is about 300°C, the recording film is converted to an erase phase in which recorded information is erased. When the temperature of the recording film increases to 600°C or over, the recording film is converted into a complete liquid phase. In the liquid phase, if the recording film is rapidly cooled, it is converted to a crystal phase. With the changing crystal and amorphous phases of a recording film, desired digital information can be recorded.

Cooling may be performed by rapidly lowering the power of a laser beam in case of 4.7 Gbyte DVD-RAM or by cutting off the power of a laser beam in case of 2.6 Gbyte DVD-RAM. Here, a recording film is spontaneously cooled through a substrate supporting the recording film.

By applying an intermittent recording pulse, as shown in Figure 3(c), to a phase-change optical disc, a smooth domain can be obtained, as defined by the solid line in Figure 3(b). In other words, thermal accumulation is restrained by intermittently applying a laser signal having the Ppeak level for the body portion of the domain so that the domain is prevented from widening.

If the recording pulse shown in Figure 3(d) is applied to the phase-change optical disc, a distorted domain is obtained, as defined by the dotted line in Figure 3(b), due to thermal accumulation. The domain defined by the dotted line in Figure 3(b) causes cross-talk between adjacent tracks or jitter between adjacent marks to occur.

Since an organic pigment optical disc requires higher recording power than a phase-change optical disc, the recording pulse shown in Figure 3(d) is used.

However, with an increase of integration density and recording speed, it is difficult to obtain satisfactory recording quality with conventional recording pulses. As integration density increases, a minimum recording length is shortened. As the recording speed increases, the time for forming marks having the same length is shortened. In other words, when integration density or recording speed increases, a clock period is shortened, and the length (in terms of time) of a multi-pulse having a functional relation to the clock period T is shortened as well. Consequently, but a single pulse is used actually and not a multi-pulse. It has been actually discussed to use a single pulse instead of a multi-pulse for DVD-R type shown in Figure 1(f). This problem also occurs in an organic pigment optical disc using a single pulse. In other words, since a laser signal cannot be intermittently applied when a single pulse is used, a tear drop phenomenon, in which the domain defined by the dotted line in Figure 3(b) is formed, occurs.

To aim to address the problem, a recording method according to preferred embodiments of the present invention uses a recording pulse in which a fine adjustment pulse is applied to a peak level except in an overdrive interval or first pulse interval of the recording pulse. The number of fine adjustment pulses is determined in accordance with the length of a mark to be recorded.

The waveform, amplitude, and period of a fine adjustment pulse vary with the media type. The top level, center level, and bottom level of a fine adjustment pulse can be adjusted with reference to a reference level. The reference level may be a peak level or a bias level. The bias level may be a bias1 level (an erase level), a bias2 level (a cooling level), or a bias3 level (a bottom level).

When the fine adjustment pulse is applied to the peak level, the power of a laser signal slightly changes according to the amplitude, waveform, and period of the fine adjustment pulse in a body portion of a domain, thereby preventing thermal accumulation. Accordingly, a smooth domain can be formed. Consequently, interference between adjacent tracks is decreased.

When the fine adjustment pulse is applied to the erase level, the power of a laser signal slightly changes according to the amplitude, waveform, and period of the fine adjustment pulse at a domain to be erased, thereby preventing thermal accumulation. Accordingly, the trace of erasure is prevented from remaining in the area of the erased domain. As a result, re-recording can be easily performed, thereby increasing recording quality, and the number of re-recordings increases.

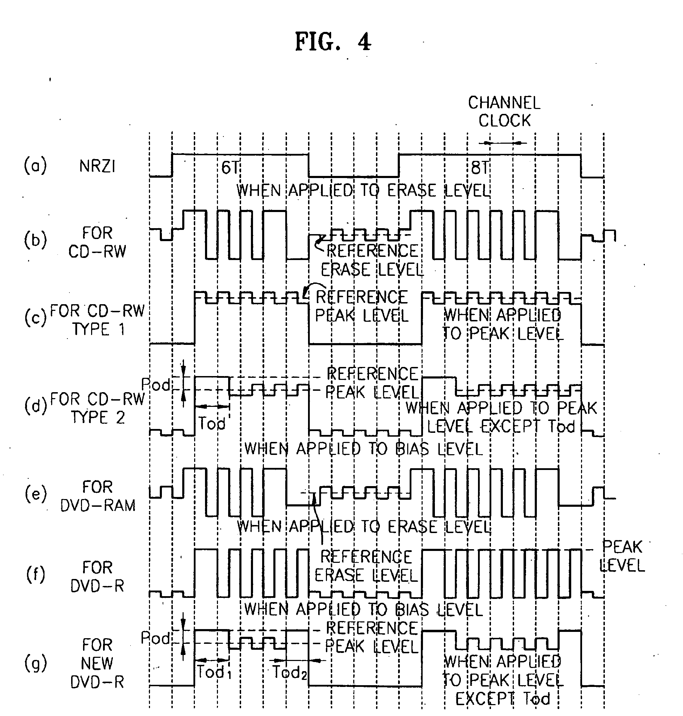

Figure 4 is a diagram showing examples of recording pulses generated by a method of generating a recording waveform according to an embodiment of the present invention. Figure 4 shows various recording waveforms (b) through (g) for recording NRZI data (a).

In the pulse (b), a fine adjustment pulse is applied to an erase level of a CD-RW. In the waveform (c), a fine adjusted pulse is applied to a peak level of a CD-RW type 1. In the waveform (d), a fine adjustment pulse is applied to a peak level and bias level of a CD-RW type 2. In the waveform (e), a fine adjustment pulse is applied to an erase level of a DVD-RAM. In the waveform (f), a fine adjustment pulse is applied to a bias level of a DVD-R. In the waveform (g), a fine adjustment pulse is applied to a peak level of a new DVD-R type.

In the waveform (b) shown in Figure 4, a fine adjustment pulse is superimposed on the erase level (Pb1 level) unlike the waveform (b) shown in Figure 1. Here, the amplitude of the fine adjustment pulse is lower than the peak level (Ppeak level), and the period thereof is 1T. In addition, the number of pulses constituting the fine adjustment pulse is "n" (which is an integer greater than or equal to 1) when the length of an interval in which the erase level is applied is nT.

In the waveform (c) shown in Figure 4, a fine adjustment pulse is superimposed on the peak level unlike the waveform (c) shown in Figure 1. Here, the amplitude of the fine adjustment pulse is lower than the peak level, and the period thereof is 1T. In addition, the number of pulses constituting the fine adjustment pulse is "n" when the length of an interval in which the peak level is applied is nT.

In the waveform (d) shown in Figure 4, a fine adjustment pulse is superimposed on the peak level and the bias level (Pb level) unlike the waveform (d) shown in Figure 1. Here, the amplitude of the fine adjustment pulse is lower than the peak level, and the period thereof is 1T. In addition, even if the fine adjustment pulse is superimposed on the peak level (Pb level),a maximum value of the fine adjustment pulse is lower than an overdrive level Pod. The fine adjustment pulse is applied to the peak level except an overdrive interval Tod. The number of pulses constituting the fine adjustment pulse is "n" when the length of an interval in which the erase level is applied is nT. In an interval in which a bias level (Pb2 level) is applied, only a top portion of the fine adjustment pulse is shown because a bias level (Pb level) that is a reference level is set as a center level of the fine adjustment pulse. Just as the fine adjustment pulse is applied to the peak level except the overdrive interval Tod in the waveform (d) shown in Figure 4, it is preferable to superimpose the fine adjustment pulse on the peak level and not to apply the fine adjustment pulse in the first pulse interval in a CD-RW.

In the waveform (e) shown in Figure 4, a fine adjustment pulse is superimposed on the erase level unlike the waveform (e) shown in Figure 1. Here, the amplitude of the fine adjustment pulse is lower than the peak level, and the period thereof is 1T. In addition, the number of pulses constituting the fine adjustment pulse is "n" when the length of an interval in which the erase level is applied is nT.

In the waveform (f) shown in Figure 4, a fine adjustment pulse is superimposed on the peak level and the bias level (Pb level) unlike the waveform (f) shown in Figure 1. Here, the amplitude of the fine adjustment pulse is lower than the peak level, and the period thereof is 1T. In an interval in which the bias level (Pb2 level) is applied, only top portion of the fine adjustment pulse is shown because the bias level (Pb level) which is a reference level is set as a center level of the fine adjustment pulse. The number of pulses constituting the fine adjustment pulse is "n" when the length of an interval in which the bias level (Pb2 level) is applied is nT.

In the waveform (g) shown in Figure 4, a fine adjustment pulse is superimposed on the peak level unlike the waveform (g) shown in Figure 1. Here, the amplitude of the fine adjustment pulse is lower than the peak level, and the period thereof is 1T. In addition, even if the fine adjustment pulse is superimposed on the peak level (Pb level), a maximum value of the fine adjustment pulse is lower than an overdrive level Pod. The fine adjustment pulse is applied to the peak level except overdrive intervals Tod₁ and Tod₂. The number of pulses constituting the fine adjustment pulse is less than "n" when the length of an interval in which the peak level is applied is nT.

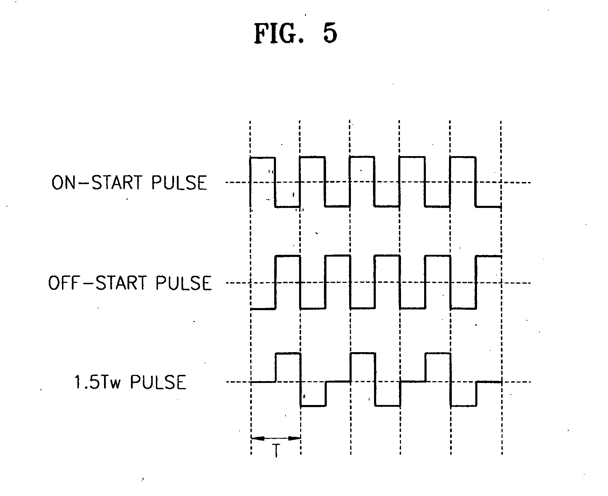

Figure 5 is a diagram showing examples of waveforms of fine adjustment pulses according to preferred embodiments of the present invention. Referring to Figure 5, the fine adjustment pulses are divided into on-start types, off-start types, and 1.5Tw types. An on-start type is a binary pulse having a positive leading pulse. An off-start type is a binary pulse having a negative leading pulse. A 1.5Tw type is a trinary pulse having a period of 1.5T. The on-start type can be applied to media for which the peak level must be applied to a leading edge. The off-start type can be applied to media for which the peak level must be applied some time after a leading edge. Accordingly, the waveform of a fine adjustment pulse is determined according to a media type.

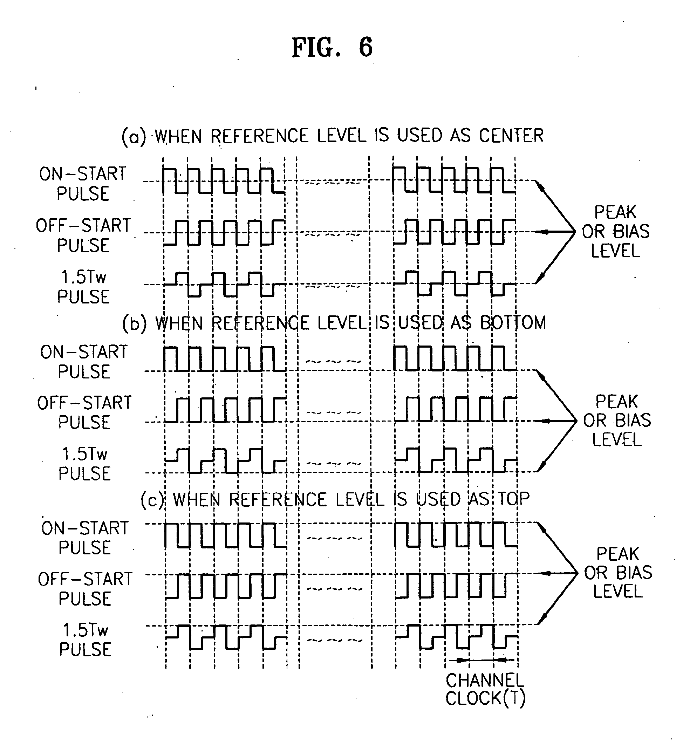

Figure 6 is a diagram showing the relationships between a fine adjustment pulse and a reference level according to an embodiment of the present invention. Figure 6 shows examples in which a peak level is used as a reference level. In Figure 6(a), a superimposing level is used as the center of a fine adjustment pulse. In Figure 6(b), a superimposing level is used as the bottom of a fine adjustment pulse. In Figure 6(c), a superimposing level is used as the top of a fine adjustment pulse.

Here, the superimposing level is a level, on which a fine adjustment pulse is superimposed, and corresponds to one of the center, top, and bottom of the fine adjustment pulse. For example, if the superimposing level corresponds to the center, the center level of the fine adjustment pulse is equal to the reference level.

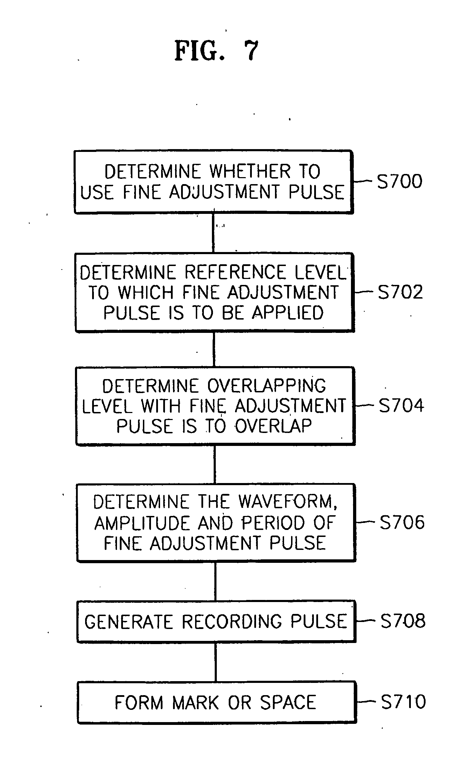

Figure 7 is a flowchart of a recording method according to an embodiment of the present invention. It is determined whether to use a fine adjustment pulse in step S700. If it is determined to use a fine adjustment pulse, a reference level to which the fine adjustment pulse is to be applied is determined according to a media type (i.e., a rewritable or recordable type) in step S702. The reference level is a peak level or bias level. Preferably, the bias level is an erase level or a bottom level. Next, a level (a superimposing level) on which the fine adjustment pulse is to be superimposed is determined in step S704. Next, the waveform, amplitude and period of the fine adjustment pulse are determined in step S706. Next, a recording pulse is generated based on the reference level, the superimposing level, and the waveform that have been determined in steps S702 through S706 in step S708. Next, a mark or space is formed using the recording pulse including a fine adjustment pulse in step S710.

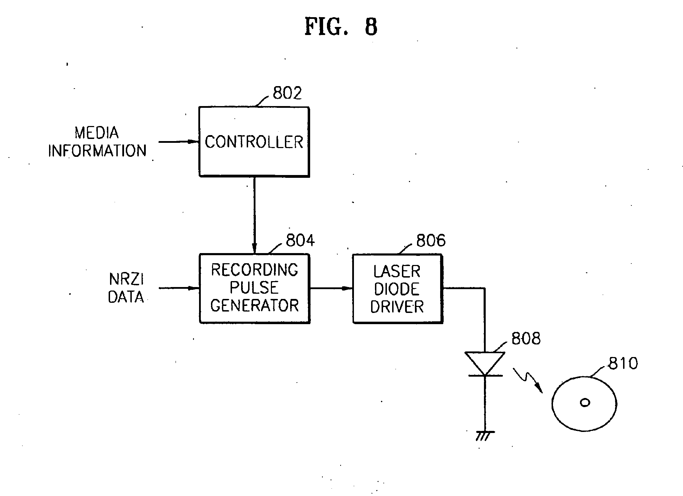

Figure 8 is a block diagram of a recording apparatus according to an embodiment of the present invention. Referring to Figure 8, the recording apparatus includes a controller 802, a recording pulse generator 804, a laser diode driver 806, and a laser diode 808. In the recording apparatus shown in Figure 8, devices that are not related to a recording pulse are omitted to simplify the description. The devices include a servo controller for controlling tracking and focusing and an optical pickup driven by the servo controller and provided with the laser diode 808. These devices are well known to those skilled in the art.

The recording film characteristics and heat transmission characteristics of media are different depending on the media manufacturers. It is difficult for the recording apparatus to research the media characteristics and appropriately control recording characteristics to the media characteristics. Accordingly, each manufacturer records media information in a lead-in area or lead-out area of a disc.

If an optical disc 810 is loaded in the recording apparatus, the recording apparatus reads media information recorded in a lead-in area or lead-out area of the optical disc 810 in order to find out a media type and power levels appropriate to the media. The media information is provided to the controller 802.

The controller 802 controls recording pulse generation performed by the recording pulse generator 804 according to the method shown in Figure 7. Particularly, the controller 802 applies control commands for controlling the waveform of a fine adjustment pulse, a superimposing level, and a reference level to the recording pulse generator 804.

More specifically, the controller 802 receives the media information from, for example, a microprocessor controlling the recording apparatus and determines the reference level to which a fine adjustment pulse is to be applied, the superimposing level on which the fine adjustment pulse is to be superimposed, and the waveform, amplitude and period of the fine adjustment pulse according to the media type. The controller 802 generates the control commands for transmitting the determined reference level, superimposing level, waveform, amplitude and period to the recording pulse generator 804.

The recording pulse generator 804 generates a recording pulse which is proper to the loaded optical disc 810, as shown in Figure 5, according to NRZI data and the control commands of the controller 802. Here, data applied to the recording pulse generator 804 complies with a modulation mode used in the recording apparatus. The data may be NRZI data or run length limited (RLL) data.

The recording pulse generated by the recording pulse generator is input into the laser diode driver 806. The laser diode driver 806 controls the laser diode 808 to output a laser signal corresponding to the recording pulse. A laser signal generated from the laser diode 808 is radiated on the optical disc 810 and forms a mark and space corresponding to the NRZI data.

According to a recording method of embodiments of the present invention, a fine adjustment pulse is applied to a peak level except in an overdrive interval or first pulse interval of the recording pulse, thereby suppressing the distortion of marks due to thermal interference between adjacent marks and thermal accumulation during recording.

## Claims

1. A method of forming a mark and a space by radiating a laser signal corresponding to a recording pulse having a peak level and a bias level onto an optical recording medium, the method comprising forming the mark and space using the recording pulse comprising a fine adjustment pulse with an amplitude less than the peak level and superimposed on the peak level; wherein the number of pulses constituting the fine adjustment pulse is equal to or less than "n" when the length of an interval in which the peak level or bias level is applied is nT, wherein "n" is an integer greater than or equal to 1 and nT is the period of the peak level and the bias level; **characterised in that**
the fine adjustment pulse is superimposed on the peak level except in an overdrive interval (Tod, Tod 1, Tod 2) or first pulse interval of the recording pulse.

2. The method of claim 1, wherein a waveform of the fine adjustment pulse is determined according to the optical recording medium (810).

3. The method of claim 1 or claim 2, wherein a period or amplitude of the fine adjustment pulse is determined according to the optical recording medium (810).

4. The method of any preceding claim, wherein a fine adjustment pulse is superimposed on the bias level.

5. The method of any preceding claim, wherein the method comprises:
determining a reference level to which a fine adjustment pulse is to be applied according to a rewritable or recordable type of the optical recording medium;
determining a level, i.e., a superimposing level, on which the fine adjustment pulse is to be superimposed on;
determining a waveform and amplitude of the fine adjustment pulse;
generating a recording pulse by superimposing the fine adjustment pulse having the determined waveform and amplitude on the superimposing level on the basis of the reference level; and
forming a mark and a space on the optical recording medium using the recording pulse.

6. The method of claim 5, wherein the reference level is one among the peak level and the bias level.

7. The method of claim 5 or claim 6, wherein the waveform of the fine adjustment pulse is led by one among a positive pulse and a negative pulse.

8. An optical recording apparatus for forming a mark and a space by radiating a laser signal corresponding to a recording pulse having a peak level and a bias level onto an optical recording medium (810), the optical recording apparatus comprising:
a recording pulse generator (804) which generates the recording pulse by superimposing a fine adjustment pulse with an amplitude less than the peak level on the peak level and the bias level; and
a laser diode (808) which generates the laser signal according to the recording pulse generated by the recording pulse generator (804); wherein the number of pulses constituting the fine adjustment pulse is equal to or less than "n" when the length of an interval in which the peak level or bias level is applied is nT, wherein "n" is an integer greater than or equal to 1 and nT the period of the peak level and the bias level; **characterised in that** the laser diode generates a fine adjustment pulse configured to be superimposed except in an overdrive interval (Tod, Tod 1, Tod 2) or first pulse interval of the recording pulse.

## Patentansprüche

1. Verfahren zum Bilden von einem Mark und einem Space durch Ausstrahlen eines Lasersignals entsprechend einem Aufzeichnungspuls mit einem Spitzenpegel und einem Biaspegel auf ein optisches Aufzeichnungsmedium, wobei das Verfahren das Bilden von dem Mark und Space unter Verwendung des Aufzeichnungspulses umfassend einen Feineinstellungspuls mit einer Amplitude umfasst, die niedriger als der Spitzenpegel und auf den Spitzenpegel aufgelagert ist; wobei die Anzahl der Pulse, die den Feineinstellungspuls bilden, gleich oder kleiner als "n" ist, wenn die Länge eines Intervalls, in welchem der Spitzenpegel oder Biaspegel angewendet wird, nT ist, wobei "n" eine ganze Zahl größer oder gleich 1 ist und nT die Periode des Spitzenpegels und des Biaspegels ist; **dadurch gekennzeichnet, dass**
der Feineinstellungspuls auf den Spitzenpegel aufgelagert wird, außer in einem Overdrive-Intervall (Tod, Tod 1, Tod 2) oder einem ersten Pulsintervall des Aufzeichnungspulses.

2. Verfahren nach Anspruch 1, wobei eine Wellenform des Feineinstellungspulses entsprechend dem optischen Aufzeichnungsmedium (810) bestimmt wird.

3. Verfahren nach Anspruch 1 oder Anspruch 2, wobei eine Periode oder Amplitude des Feineinstellungspulses entsprechend dem optischen Aufzeichnungsmedium (810) bestimmt wird.

4. Verfahren nach einem vorhergehenden Anspruch, wobei ein Feineinstellungspuls auf den Biaspegel aufgelagert wird.

5. Verfahren nach einem vorhergehenden Anspruch, wobei das Verwahren umfasst:
Bestimmen eines Referenzpegels, auf den ein Feineinstellungspuls angewendet werden soll, entsprechend einem wiederbeschreibbaren oder beschreibbaren Typs des optischen Aufzeichnungsmediums;
Bestimmen eines Pegels, d.h. eines Auflagerungspegels, auf den der Feineinstellungspuls aufgelagert werden soll;
Bestimmen einer Wellenform und Amplitude des Feineinstellungspulses;
Erzeugen eines Aufzeichnungspulses durch Auflagern des Feineinstellungspulses mit der bestimmten Wellenform und Amplitude auf den Auflagerungspegel auf der Basis des Referenzpegels; und
Bilden von einem Mark und einem Space auf dem optischen Aufzeichnungsmedium unter Verwendung des Aufzeichnungspulses.

6. Verfahren nach Anspruch 5, wobei der Referenzpegel ein Spitzenpegel oder ein Biaspegel ist.

7. Verfahren nach Anspruch 5 oder Anspruch 6, wobei die Wellenform des Feineinstellungspulses von einem positiven Puls oder einem negativen Puls angeführt wird.

8. Vorrichtung zur optischen Aufzeichnung zum Bilden von einem Mark und einem Space durch Ausstrahlen eins Lasersignals entsprechend einem Aufzeichnungspuls mit einem Spitzenpegel und einem Biaspegel auf ein optisches Aufzeichnungsmedium (810), wobei die Vorrichtung zur optischen Aufzeichnung umfasst:
einen Aufzeichnungspulsgenerator (804), der den Aufzeichnungspuls durch Auflagern eines Feineinstellungspulses mit einer Amplitude, die niedriger als der Spitzenpegel ist, auf den Spitzenpegel und den Biaspegel erzeugt; und
eine Laserdiode (808), die das Lasersignal entsprechend dem Aufzeichnungspuls erzeugt, der von dem Aufzeichnungspulsgenerator (804) erzeugt wird; wobei die Anzahl der Pulse, die den Feineinstellungspuls bilden, gleich oder kleiner als "n" ist, wenn die Länge eines Intervalls, in welchem der Spitzenpegel oder Biaspegel angewendet wird, nT ist, wobei "n" eine ganze Zahl größer oder gleich 1 ist und nT die Periode des Spitzenpegels und des Biaspegels ist; **dadurch gekennzeichet, dass** die Laserdiode einen Feineinstellungspuls erzeugt, der dazu konfiguriert ist, aufgelagert zu werden, außer in einem Overdrive-Intervall (Tod, Tod 1, Tod 2) oder einem ersten Pulsintervall des Aufzeichnungspulses.

## Revendications

1. Procédé de formation d'une marque et d'un espace par rayonnement d'un signal laser correspondant à une impulsion d'enregistrement ayant un niveau de pic et un niveau de polarisation sur un support d'enregistrement optique, le procédé comprenant la formation de la marque et de l'espace en utilisant une impulsion d'enregistrement comprenant une impulsion de réglage fin avec une amplitude inférieure au niveau de pic et superposée au niveau de pic ; dans lequel le nombre d'impulsions constituant l'impulsion de réglage fin est égale ou inférieur à "n" lorsque la longueur d'un intervalle, dans lequel le niveau de pic ou le niveau de polarisation est appliqué, vaut nT, où "n" est un entier supérieur ou égal à 1 et nT est la période du niveau de pic et du niveau de polarisation ; **caractérisé en ce que**
l'impulsion de réglage fin est superposée au niveau de pic, sauf dans un intervalle de surcharge (Tod, Tod 1, Tod 2) ou le premier intervalle de l'impulsion d'enregistrement.

2. Procédé selon la revendication 1, dans lequel une forme d'onde de l'impulsion de réglage fin est déterminée selon le support d'enregistrement optique (810).

3. Procédé selon la revendication 1 ou la revendication 2, dans lequel une période ou une amplitude de l'impulsion de réglage fin est déterminée selon le support d'enregistrement optique (810).

4. Procédé selon l'une quelconque des revendications précédentes, dans lequel une impulsion de réglage fin est superposée au niveau de polarisation.

5. Procédé selon l'une quelconque des revendications précédentes, dans lequel le procédé comprend :
la détermination d'un niveau de référence auquel une impulsion de réglage fin doit être appliquée selon un type réinscriptible ou enregistrable du support d'enregistrement optique ;
la détermination d'un niveau, c'est-à-dire d'un niveau superposé, auquel l'impulsion de réglage fin doit être superposée ;
la détermination d'une forme d'onde et de l'amplitude de l'impulsion de réglage fin ;
la génération d'une impulsion d'enregistrement par superposition de l'impulsion de réglage fin ayant la forme d'onde et l'amplitude déterminées au niveau de superposition sur la base du niveau de référence ; et
la formation d'une marque et d'un espace sur le support d'enregistrement optique en utilisant l'impulsion d'enregistrement.

6. Procédé selon la revendication 5, dans lequel le niveau de référence est un niveau choisi parmi le niveau de pic et le niveau de polarisation.

7. Procédé selon la revendication 5 ou la revendication 6, dans lequel la forme d'onde de l'impulsion de réglage fin est induite par une impulsion choisie parmi une impulsion positive et une impulsion négative.

8. Appareil d'enregistrement optique pour former une marque et un espace par rayonnement d'un signal laser correspondant à une impulsion d'enregistrement ayant un niveau de pic et un niveau de polarisation sur un support d'enregistrement optique (810), l'appareil d'enregistrement optique comprenant :
un générateur d'impulsion d'enregistrement (804) qui génère l'impulsion d'enregistrement par superposition d'une impulsion de réglage fin avec une amplitude inférieure au niveau de pic et au niveau de polarisation ; et
une diode laser (808), qui génère le signal laser selon l'impulsion d'enregistrement générée par le générateur d'impulsion d'enregistrement 804), dans lequel le nombre d'impulsions constituant l'impulsion de réglage fin est égal ou inférieur à "n" lorsque la longueur d'un intervalle, dans lequel le niveau de pic ou le niveau de polarisation est appliqué, vaut nT, où "n" est un entier supérieur ou égal à 1 et nT la période du niveau de pic et du niveau de polarisation ; **caractérisé en ce que** la diode laser génère une impulsion de réglage fin configurée pour être superposée, excepté dans un intervalle de surcharge (Tod, Tod 1, Tod 2) ou dans un premier intervalle de l'impulsion d'enregistrement.
